# EUROPEAN PATENT APPLICATION

(11) **EP 2 642 134 A1**
(43) Date of publication of application: **25.09.2013**
(21) Application number: 10859829.3
(22) Date of filing: 15.11.2010
(51) Int. Cl.: F15B 20/00, F15B 13/02, E02F 9/00

(54) **HYDRAULIC CYLINDER WITH VARIABLE CUSHION ORIFICE**

(71) Applicant: Volvo Construction Equipment AB, 631 85 Eskilstuna (SE)
(72) Inventor: KIM, Hong-Suk, Changwon-si Gyeongsangnam-do 642-780 (KR)
(74) Representative: Zimmermann, Tankred Klaus
(86) International application number: PCT/KR2010/008038
(87) International publication number: WO 2012/067276

(57) **Abstract**

A hydraulic cylinder having a variable cushion orifice is provided, which can simply adjust the size of a cushion orifice hole, which is provided to mitigate impact generated at a stroke end of a cylinder rod, from the outside of the hydraulic cylinder. The hydraulic cylinder having a variable cushion orifice includes a first cushion orifice formed on a head cover, a second cushion orifice communicating with the first cushion orifice and having an inlet formed on an outer side surface of the head cover, a third cushion orifice making the second cushion orifice communicate with a hydraulic flow path formed on the head cover, and a plug for a variable orifice replaceably engaged with the second cushion orifice and having an orifice formed thereon so as to adjust an amount of hydraulic fluid discharged to the hydraulic flow path through the first cushion orifice at the stroke end of the cylinder rod.

## Description

### TECHNICAL FIELD

The present invention relates to a hydraulic cylinder having a variable cushion orifice. More particularly, the present invention relates to a hydraulic cylinder having a variable cushion orifice, which can adjust the size of a cushion orifice hole that is provided to mitigate an impact generated at a stroke end of a cylinder rod from the outside of the hydraulic cylinder.

### BACKGROUND ART

In general, a hydraulic cylinder is provided with a cushion device which can minimize breakage of the hydraulic cylinder and damage of a hydraulic system through mitigation of impact generated due to high-pressure hydraulic fluid that is formed in a pressure chamber between a piston and a head cover at a stroke end of the cylinder. The cushion device may include a cushion ring and a cushion plunger mounted on a cylinder rod, and a cushion orifice formed on the head cover. The cushion orifice performs cushion function through adjustment of an amount of hydraulic fluid that is discharged through the orifice at the stroke end of the cylinder rod.

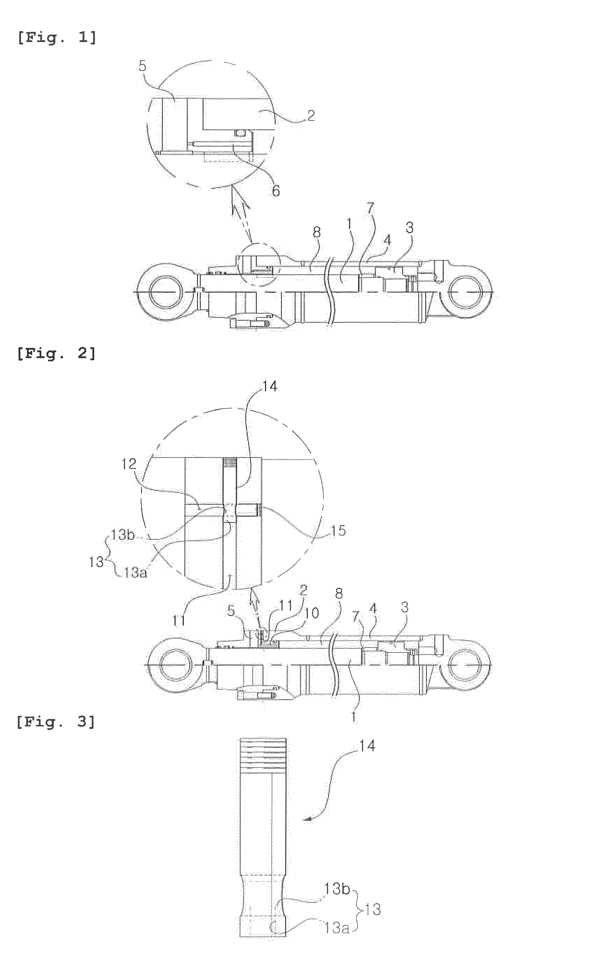

As illustrated in Fig. 1, a hydraulic cylinder in the related art includes a head cover 2 on which a cylinder rod 1 slides; a cylinder tube 4 which is integrally formed to extend from the head cover 2 and on which a piston 3 reciprocates; a cushion orifice 6 controlling an amount of hydraulic fluid that is discharged through a hydraulic flow pat 5 formed on the head cover 2 to mitigate impact due to high-pressure hydraulic fluid formed in a pressure chamber 8 at a stroke end of the cylinder rod 1; and a cushion ring 7 mounted on an end portion of the cylinder rod 1.

In the case of the hydraulic cylinder as described above, the cushion orifice 6 is formed inside the hydraulic cylinder. Due to this, it is not possible to change the hole size of the cushion orifice 6 after the hydraulic cylinder, in which the hole size of the cushion orifice has been determined, is assembled and mounted on construction equipment. That is, the construction equipment mounted with the hydraulic cylinder has the same cushion performance regardless of operator's preference or a change of use state of the construction equipment.

Further, in manufacturing hydraulic cylinders that are suitable to respective construction equipment, the hydraulic cylinders may be unable to be commonly used due to the characteristics of cushion performance even in the case where the mounted hydraulic cylinders have similar specifications.

### DISCLOSURE

### TECHNICAL PROBLEM

Therefore, the present invention has been made to solve the above-mentioned problems occurring in the related art, and one embodiment of the present invention is related to a hydraulic cylinder having a variable cushion orifice, which can variably adjust the size of a cushion orifice hole to change the cushion performance in a state where the hydraulic cylinder that is mounted on construction equipment is not replaced or disassembled.

One embodiment of the present invention is related to a hydraulic cylinder having a variable cushion orifice, which can unitarily use various kinds of hydraulic cylinders having different cushion performances, and can perform cushion tuning while confirming the cushion performance so as to improve the characteristics or operability of the equipment through the cushion performance change.

### TECHNICAL SOLUTION

In accordance with one aspect of the present invention, there is provided a hydraulic cylinder having a variable cushion orifice including a head cover on which a cylinder rod slides, a cylinder tube which is formed to extend from the head cover and on which a piston reciprocates, and a cushion device that mitigates impact occurring at a stroke end of the cylinder rod, which includes a first cushion orifice formed on the head cover; a second cushion orifice communicating with the first cushion orifice and having an inlet formed on an outer side surface of the head cover; a third cushion orifice making the second cushion orifice communicate with a hydraulic flow path formed on the head cover; and a plug for a variable orifice replaceably engaged with the second cushion orifice and having an orifice formed thereon so as to adjust an amount of hydraulic fluid discharged to the hydraulic flow path through the first cushion orifice during the stroke end of the cylinder rod.

In the hydraulic cylinder having a variable cushion orifice in accordance with the aspect of the present invention, it is preferable that the orifice formed on the plug for the variable orifice includes a first orifice communicating with the second cushion orifice, and a second orifice communicating with the first orifice and making the second cushion orifice and the third cushion orifice mutually communicate with each other.

### ADVANTAGEOUS EFFECTS

As described above, the hydraulic cylinder having a variable cushion orifice according to the aspect of the present invention has the following advantages.

The size of the cushion orifice hole can be variably adjusted in a state where the hydraulic cylinder mounted on construction equipment including an excavator is not replaced or disassembled, and thus workability and convenience can be provided.

Further, various kinds of hydraulic cylinders having different cushion performances are commonly used to improve the productivity, and cushion tuning can be performed while the cushion performance is confirmed to improve the characteristics or operability of the equipment.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a schematic view of a hydraulic cylinder in the related art;
Fig. 2 is a schematic view of a hydraulic cylinder having a variable cushion orifice according to an embodiment of the present invention; and
Fig. 3 is a view of a plug having a variable cushion orifice in a hydraulic cylinder having the variable cushion orifice according to an embodiment of the present invention.

### * Description of Reference Numerals in the Drawing

- 1:: cylinder rod
- 2:: head cover
- 3:: piston
- 4:: cylinder tube
- 5:: hydraulic flow path
- 7:: cushion ring
- 8:: pressure chamber
- 10:: first cushion orifice
- 11:: second cushion orifice
- 12:: third cushion orifice
- 13:: orifice
- 13a:: first orifice
- 13b:: second orifice
- 14:: variable orifice plug

### BEST MODE

Hereinafter, preferred embodiments of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

According to an embodiment of the present invention as illustrated in Figs. 2 and 3, there is provided a hydraulic cylinder having a variable cushion orifice including a head cover 2 on which a cylinder rod 1 slides, a cylinder tube 4 which is formed to extend from the head cover 2 and on which a piston 4 reciprocates, and a cushion device that mitigates impact occurring at a stroke end of the cylinder rod 1, which includes a first cushion orifice 10 formed on the head cover 2; a second cushion orifice 11 communicating with the first cushion orifice 10 and having an inlet formed on an outer side surface of the head cover 2; a third cushion orifice 12 making the second cushion orifice 11 communicate with a hydraulic flow path 5 formed on the head cover 2; and a plug 14 for a variable orifice replaceably engaged with the second cushion orifice 11 through the inlet of the second cushion orifice 11, and having an orifice 13 formed thereon so as to adjust an amount of hydraulic fluid discharged to the hydraulic flow path 5 through the first cushion orifice 10 at the stroke end of the cylinder rod 1.

In this case, the orifice 13 formed in a "T" shape on the plug 14 for the variable orifice includes a first orifice 13a communicating with the second cushion orifice 11, and a second orifice 13b communicating with the first orifice 13a and making the second cushion orifice 11 and the third cushion orifice 12 mutually communicate with each other.

In the drawing, an unexplained reference numeral 15 denotes a plug screw-engaged with the inlet side of the third cushion orifice 12 to prevent leakage of the hydraulic fluid.

Since the configuration except for the cushion device including the first cushion orifice 10, the second cushion orifice 11, the third cushion orifice 12, and the plug 14 for the variable orifice is substantially the same as the configuration of the hydraulic cylinder illustrated in Fig. 1, detailed description of their configuration and operation will be omitted, and the same reference numerals are used for the duplicate components.

Hereinafter, a use example of the hydraulic cylinder having the variable cushion orifice according to an embodiment of the present invention will be described in detail with reference to the accompanying drawings.

As illustrated in Figs. 2 and 3, hydraulic fluid in the pressure chamber 8 between the piston 3 and the head cover 2 becomes in a high-pressure state at a stroke end of the cylinder rod 1 as the piston 3 moves toward the head cover 2. The hydraulic fluid in the pressure chamber 8 is discharged to the hydraulic flow path 5 formed in the head cover 2 through the cushion orifice. At this time, as the cushion orifice controls the amount of hydraulic fluid that is discharged from the pressure chamber 8 to the hydraulic flow path 5, the impact is mitigated, and thus the breakage of the hydraulic cylinder and the damage of the hydraulic system can be minimized.

That is, at the stroke end of the cylinder rod 1, the high-pressure hydraulic fluid that is formed in the pressure chamber 8 is discharged to the hydraulic flow path 5 after passing through the first cushion orifice 10, the second cushion orifice 11, the first orifice 13a and the second orifice 13b formed in the plug 14 for the variable orifice, and the third cushion orifice 12 in order.

On the other hand, in the case of changing the cushion performance to improve the specifications or the operation performance of the equipment, the size of the cushion orifice hole can be changed through replacement of the plug 14 for the variable orifice in which the first and second orifices 13a and 13b are formed.

That is, since the plug 14 for the variable orifice is screw-engaged with the inlet of the second cushion orifice 11, the amount of hydraulic fluid that is discharged from the pressure chamber 8 to the hydraulic flow path 5 at the stroke end of the cylinder rod 1 can be controlled by the first and second orifices 13a and 13b formed in a "T" shape in the plug 14 for the variable orifice. That is, the cushion performance of the hydraulic cylinder can be changed through replacement of the plug 14 for the variable orifice in which the orifice holes have different sizes with respect to the hydraulic cylinders having the same specifications.

As described above, in the case of changing the size of the orifice hole to improve the cushion performance of the hydraulic cylinder, the size of the orifice hole can be easily changed through replacement of the plug 14 for the variable orifice only from the outside of the hydraulic cylinder in a state where the hydraulic cylinder is mounted on the construction equipment. Since the size of the cushion orifice hole can be changed in a state where the hydraulic cylinder is assembled to the equipment, it is possible to tune the cushion performance of the hydraulic cylinder.

Further, since the size of the orifice hole is determined regardless of the fastening depth between the second cushion orifice 11 and the plug 14 for the variable orifice, the productivity of the cushion device including the plug 14 for the variable orifice can be improved.

Further, since the size of the cushion orifice hole is changed through replacement of the plug 14 for the variable orifice, foreign substances, which are inserted into the cushion orifice to cause the cushion orifice to be clogged, can be easily removed through replacement of the plug 14 for the variable orifice.

### INDUSTRIAL APPLICABILITY

As apparent from the above description, according to the present invention having the above-described configuration, the size of the cushion orifice hole can be variably adjusted in a state where the hydraulic cylinder mounted on the construction equipment is not replaced or disassembled, and thus the workability can be improved. Further, it is good economy to commonly use various kinds of hydraulic cylinders having different cushion performances.

Further, since cushion tuning is possible while the cushion performance is confirmed in a state where the hydraulic cylinder is mounted on the equipment, the cushion tuning becomes possible in hydraulic component development stages.

## Claims

1. A hydraulic cylinder having a variable cushion orifice including a head cover on which a cylinder rod slides, a cylinder tube which is formed to extend from the head cover and on which a piston reciprocates, and a cushion device that mitigates an impact occurring at a stroke end of the cylinder rod, the hydraulic cylinder comprising:
a first cushion orifice formed on the head cover;
a second cushion orifice communicating with the first cushion orifice and having an inlet formed on an outer side surface of the head cover;
a third cushion orifice making the second cushion orifice communicate with a hydraulic flow path formed on the head cover; and
a plug for a variable orifice replaceably engaged with the second cushion orifice and having an orifice formed thereon so as to adjust an amount of hydraulic fluid discharged to the hydraulic flow path through the first cushion orifice at the stroke end of the cylinder rod.

2. The hydraulic cylinder having a variable cushion orifice according to claim 1, wherein the orifice formed on the plug for the variable orifice comprises:
a first orifice communicating with the second cushion orifice; and
a second orifice communicating with the first orifice and making the second cushion orifice and the third cushion orifice mutually communicate with each other.
